(19) Europäisches Patentamt
European Patent Office
Office européen des brevets

(11) **EP 4 213 335 B1**

(12) **EUROPEAN PATENT SPECIFICATION**

(45) Date of publication and mention
of the grant of the patent:
**31.12.2025   Bulletin 2026/01**

(21) Application number: **22856132.0**

(22) Date of filing: **08.08.2022**

(51) International Patent Classification (IPC):
*H02J 7/00* *(2006.01)*   *H02J 3/32* *(2006.01)*
*H02J 3/38* *(2006.01)*   *H02J 3/48* *(2006.01)*
*H02J 7/35* *(2006.01)*

(52) Cooperative Patent Classification (CPC):
**H02J 3/32; H02J 3/381; H02J 3/48; H02J 7/0018;
H02J 7/00302; H02J 7/0048; H02J 7/005;
H02J 7/35;** Y02E 60/10

(86) International application number:
**PCT/KR2022/011740**

(87) International publication number:
**WO 2023/018133 (16.02.2023 Gazette 2023/07)**

(54) **POWER DISTRIBUTION METHOD AND ENERGY STORAGE SYSTEM USING SAME**

STROMVERTEILUNGSVERFAHREN UND ENERGIESPEICHERSYSTEM DAMIT

PROCÉDÉ DE DISTRIBUTION DE PUISSANCE ET SYSTÈME DE STOCKAGE D'ÉNERGIE
L'UTILISANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **09.08.2021   KR 20210104286**

(43) Date of publication of application:
**19.07.2023   Bulletin 2023/29**

(73) Proprietor: **LG Energy Solution, Ltd.
Seoul 07335 (KR)**

(72) Inventors:
• **JO, Hyeungil
Daejeon 34122 (KR)**
• **CHOI, Yoon Joon
Daejeon 34122 (KR)**
• **KIM, Jongcheol
Daejeon 34122 (KR)**

(74) Representative: **Plasseraud IP
104 Rue de Richelieu
CS92104
75080 Paris Cedex 02 (FR)**

(56) References cited:
JP-A- 2014 017 982    KR-A- 20160 094 228
KR-B1- 101 243 694    KR-B1- 101 699 958
US-A1- 2012 223 670    US-A1- 2017 070 049
US-A1- 2021 168 964

**Description**

[Technical Field]

The present invention relates to a power distribution method and an energy storage system using the method, and more particularly, to a method of distributing power based on states of charge of batteries and an energy storage system using the method.

[Background Art]

An energy storage system relates to renewable energy, a battery that stores electric power, and grid power. Recently, as the spread of smart grid and renewable energy is expanding and the efficiency and the stability of the power system are emphasized, a demand for energy storage systems for power supply and demand control and power quality improvement is increasing. Depending on a purpose of use, energy storage systems may have different output and capacity. In order to configure a large-capacity energy storage system, a plurality of battery systems may be connected.
Among ESS systems, a system connected with a photovoltaic (PV) system is changing from an alternating current (AC)-coupled system to a direct current (DC)-coupled system. In a DC-coupled ESS system, the photovoltaic system and the battery system are DC voltage systems, but the grid is an AC voltage system, and thus, a power conversion device is needed. Currently, a central DC/DC converter is applied to a DC-coupled battery system. However, even in this case, a problem arises that it is hard to control individual battery racks properly. US2012/223670 A1 relates to a control device that includes: an acquisition unit which acquires voltage information indicating a voltage applied to a capacitor provided between a power generation unit and a load via first and second power supply lines, and deterioration information indicating a state of deterioration of a storage battery connected to the power generation unit; a determination unit which compares the acquired voltage information with a reference voltage so as to detect a fluctuation of the voltage, and determines power to be outputted so as to suppress the fluctuation; and an informing unit (203) which informs the storage battery of a current value corresponding to the power to be outputted, wherein the determination unit detects a state of deterioration of the storage battery using the deterioration information, and determines power to be outputted in accordance with the state of deterioration. US2021/168964 A1 relates to a back-up battery rack that includes a plurality of battery modules, each of which has completed a primary usage as an emergency power source for the server rack.

[Summary]

[Technical Problem]

Embodiments of the present disclosure provide a power distribution method based on a state of charge (SOC) in an energy storage system including different types of battery racks.
Embodiments of the present disclosure provide an energy storage system using the power distribution method.
Embodiments of the present disclosure provide a battery system control apparatus configured to determine a power distribution method in an energy storage system including different types of battery racks.

[Technical Solution]

In order to achieve the objective of the present disclosure, a power distribution method according to claim 1 is provided in a first aspect.
Here, the collecting information about each battery rack and information about each DC/DC converter may include collecting information about a type, a state, and a power limit of each battery rack; and collecting information about a power limit and a state of each DC/DC converter.
The setting a power command for each battery rack may include, for battery racks of the same type and having a similar state of health (SOH) range, a calculating charge power or a discharge power for each battery rack based on an output power requested by the energy storage system, a sum of states of charge (SOC) of battery racks in operation, and a SOC of each battery rack.
The setting a power command for each battery rack may include, for battery racks of different types or for battery racks having different states of health(SOH) ranges, calculating the power command for each battery rack based on an output power requested by the energy storage system, a nominal capacity of each battery rack, a SOH of each battery rack, and a states of charge (SOC) of each battery rack.
According to another aspect of the present disclosure, an energy storage system according to claim 8 is provided.
The battery system controller may be configured to collect information about a type, a state, and a power limit of each battery rack through the BMS and to collect information about a power limit and a state of each DC/DC converter through a switching hub connected to the plurality of DC/DC converters.

The battery system controller may be configured, for battery racks of the same type and having a similar state of health (SOH) range, to calculate charge power or discharge power for each battery rack based on an output power requested by the energy storage system, a sum of states of charge (SOC) of battery racks in operation, and a SOC of each battery rack.

The battery system controller may be configured, for battery racks of different types or for battery racks having different state of health (SOH) ranges, to calculate the power command for each battery rack based on an output power requested by the energy storage system, a nominal capacity of each battery rack, a SOH of each battery rack, and a state of charge (SOC) of each battery rack.

According to another aspect of the present disclosure, a battery system control apparatus according to claim 5 is provided.

Here, the instruction to set a power command for each battery rack may include an instruction, for battery racks of the same type and having a similar state of health (SOH) range, to calculate charge power or discharge power for each battery rack based on an output power requested by the energy storage system, a sum of states of charge (SOC) of battery racks in operation, and a SOC of each battery rack.

In addition, the instruction to set a power command for each battery rack includes an instruction, for battery racks of different types or for battery racks having different state of health (SOH) ranges, to calculate the power command for each battery rack based on an output power requested by the energy storage system, a nominal capacity of each battery rack, a SOH of each battery rack, and a state of charge (SOC) of each battery rack.

[Advantageous Effects]

According to the embodiment of the present disclosure, in an energy storage system including battery racks of the same type and having the same SOH, as well as battery racks of different types and having different SOHs, the energy storage system and battery system can be stably operated while maintaining similar SOCs among the battery racks.

[Brief Description of the Drawings]

FIG. 1 is a block diagram of a conventional AC-coupled energy storage system.

FIG. 2 is a block diagram of a DC-coupled energy storage system according to embodiments of the present invention.

FIG. 3 illustrates a concept of a power distribution method based on battery states according to embodiments of the present invention.

FIG. 4A is a graph illustrating charge/discharge characteristics of a battery.

FIG. 4B is a graph illustrating charge/discharge characteristics of a battery for different powers at a same ambient temperature.

FIG. 4C is a graph showing the charge/discharge characteristics of a battery for different ambient temperatures at the same power.

FIG. 5 shows a concept of calculating a power limit of a battery rack.

FIG. 6 shows a concept of calculating a power limit of a DC/DC converter.

FIGs. 7A and 7B show a flowchart of a method for determining a power distribution scheme and generating a power command for each case according to embodiments of the present invention.

FIG. 8A shows a modeling of a battery rack, as one of simulation conditions, for confirming effects of a power distribution method according to the present invention.

FIG. 8B shows an input power pattern, as one of simulation conditions, for confirming effects of a power distribution method according to the present invention.

FIG. 8C shows initial conditions of each battery pack, as one of simulation conditions, for confirming effects of a power distribution method according to the present invention.

FIG. 9A shows a simulation result using a conventional power distribution method.

FIGs. 9B and 9C show simulation results for a power distribution method according to embodiments of the present invention.

FIG. 10 is an operational flowchart of a power distribution method according to embodiments of the present invention.

[Detailed Description]

Accordingly, while the invention is susceptible to various modifications and alternative forms, specific embodiments thereof are shown by way of example in the drawings and will herein be described in detail. It should be understood, however, that there is no intent to limit the invention to the particular forms disclosed, but on the contrary, the invention is to cover all modifications, falling within the scope of the claims. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion **(i.e.,** "between" versus "directly between", "adjacent" versus "directly adjacent", etc.) .

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises", "comprising,", "includes" and/or "including", when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Some terms used herein are defined as follows.

A nominal capacity (Nominal Capa.) refers to a capacity [Ah] of a battery during development by a battery manufacturer.

State of Charge (SOC) refers to a current state of charge of a battery, represented in percent points [%], and State of Health (SOH) may be a current condition of a battery compared to its ideal or original conditions, represented in percent points [%].

A battery rack refers to a system of a minimum single structure assembled by connecting battery packs in series/parallel. A battery rack can be monitored and controlled by a battery management system (BMS). A battery rack may include several battery packs and a battery protection unit or any other protection device.

A battery bank refers to a group of large-scale battery rack systems configured by connecting several racks in parallel. A bank BMS for a battery bank may monitor and control several rack BMSs, each of which manages a battery rack.

A battery system controller (BSC) refers to a device that controls the topmost level of a battery system including a battery bank level structure or a multiple bank level structure. A battery system controller may also be referred to a battery system controller.

A power limit refers to a limit of power that can be output from a battery, which is set in advance by a battery manufacturer based on a battery condition. A rack power limit may mean an output power limit ([kW]) set for a rack level, and can be set based on a SOC and a temperature of the battery.

The power limit can be a charge power limit or a discharge power limit depending on whether charging or discharging is applied. In addition, according to a battery system structure, a rack power limit or a bank power limit may be defined.

Hereinafter, exemplary embodiments of the present invention will be described in detail with reference to the accompanying drawings.

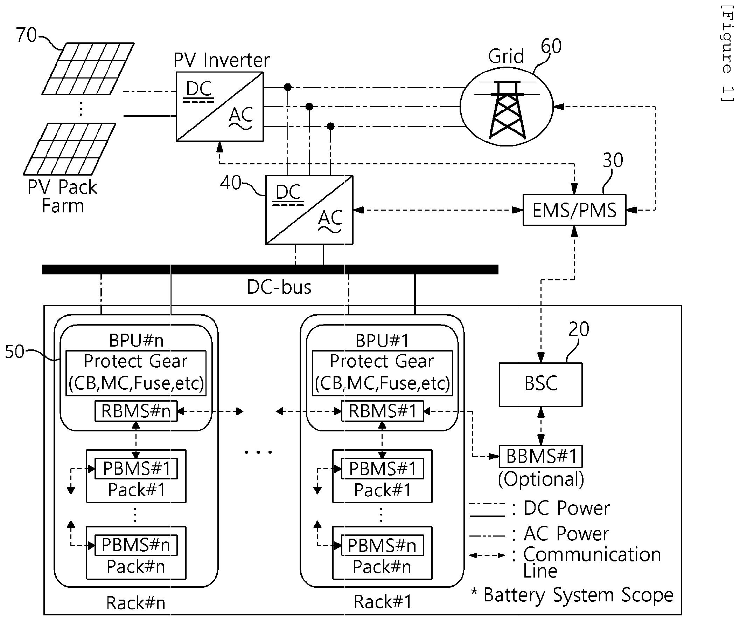

FIG. 1 is a block diagram of a conventional AC-coupled energy storage system.

In an energy storage system (ESS), typically a battery cell is a minimum unit of storing energy or power. A series/parallel combination of battery cells may form a battery pack, and a plurality of battery packs may form a battery rack. In other words, a battery rack can be a minimum unit of a battery system as a series/parallel combination of battery packs. Here, depending on a device or a system in which the battery is used, a battery pack may be referred to as a battery module.

Referring to FIG. 1, a battery rack may include a plurality of battery packs and a battery protection unit (BPU) 50 or a protection device. The battery rack can be monitored and controlled through a Rack BMS(RBMS). The RBMS may monitor a current, a voltage and a temperature of each battery rack to be managed, calculate a State Of Charge (SOC) of the battery based on a monitoring result, and control charging and discharging.

The battery protection unit (BPU) 50 is a device for protecting the battery from an abnormal current and a fault current in a battery rack. The BPU may include a main contactor (MC), a fuse, a circuit breaker (CB) or a Disconnect Switch(DS), and the like. The BPU may control the battery system rack by rack through on/off controlling the main contactor based on a control from the Rack BMS. The BPU may also protect the battery system from a short circuit current using a fuse in the event of a short circuit. As such, the existing battery system can be controlled through a protection device such as a BPU or a switchgear.

A battery system controller (BSC) 20 is located in each battery section which includes a plurality of batteries, peripheral circuits, and devices to monitor and control objects such as a voltage, a current, a temperature, and a circuit breaker. The battery system controller is an uppermost control device in a battery system including at least one of battery bank with a plurality of battery racks. The battery system controller may also be used as a control device in a battery system having a plurality of bank level structures.

A power conversion system (PCS) 40 installed in each battery section controls power supplied from the outside(i.e., the power grid 60) and power supplied from the battery section to the outside, thereby controlling charging and discharging of the battery. The power conversion system may include a DC/AC inverter. In case the energy storage system interworks with a photovoltaic system (PV), the system may include a PV inverter.

Meanwhile, the output of each BPU may be connected to the power conversion system 40 through a DC bus, and the power conversion system 40 may be connected to the power grid 60. In addition, an Energy Management System (EMS)/ Power Management System (PMS) 30 may be configured to manage the energy storage system as a whole.

In a conventional AC-coupled system as shown in FIG. 1, a DC/AC inverter is connected to the PV and a DC/AC inverter is connected to the battery system, and thus, charging and discharging of the battery system is inefficient. In addition, in the conventional system, the battery system is controlled only through protection elements such as a BPU and a switch gear, and thus, it is impossible to individually control amount of power in consideration of individual characteristics of batteries such as a battery capacity, a SOH, and a SOC.

Furthermore, in an energy storage system having a plurality of battery racks, a life span of the entire system may be shortened due to a decrease in a lifespan of a specific rack. In other words, the characteristics of the other racks may deteriorate because of a defective rack. However, in an existing energy storage system including a battery protection unit, it is impossible to distribute amounts of charge/discharge power based on rack states. Furthermore, the system can start operating only when a SOC deviation among battery racks before being starting is within a few %. In addition, there are other restrictions such that a battery voltage suitable for a PCS voltage range needs to be secured.

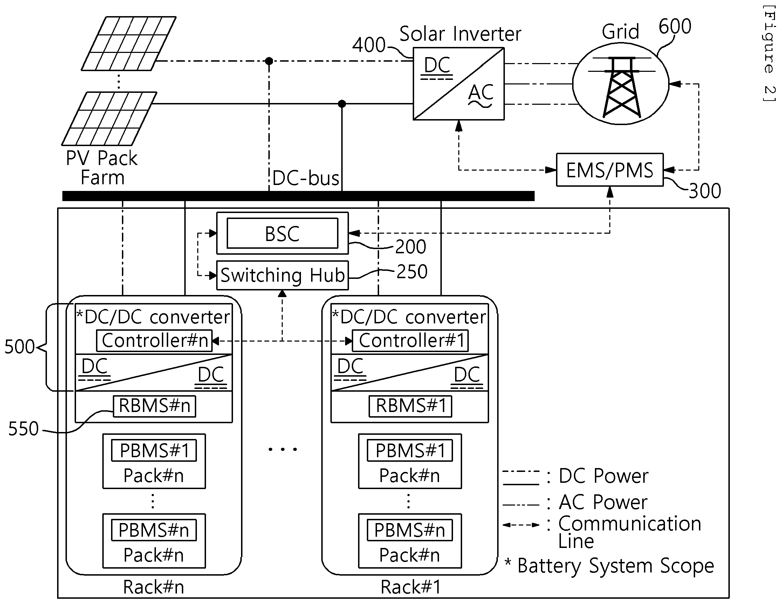

FIG. 2 is a block diagram of a DC-coupled energy storage system according to embodiments of the present invention.

In a DC-coupled energy storage system, a DC/DC converter 500 capable of individually controlling DC voltage/current for each battery system is needed. Since a DC/DC converter is placed in the battery system, a DC/AC converter used for connecting with a photovoltaic system is no longer needed, thereby increasing efficiency. In addition, protection control of the battery system is possible through a DC/DC converter for each battery system, as in an existing energy storage system. Furthermore, it is possible to control amount of battery power based on characteristics of individual battery systems even when battery racks have differences in SOC, SOH, and capacity.

In the system shown in FIG. **2,** each battery rack may include a RBMS (550) and a DC/DC converter (500) for a corresponding rack. The DC/DC converter 500 may include a main body and a DC/DC controller. The RBMS 550 and the DC/DC converter 500 may also be incorporated into one hardware device.

A battery rack may include a plurality of packs, and each pack may be managed by a pack BMS (PBMS). In addition, the battery rack can be monitored and controlled by a RBMS (Rack BMS) (550). The RBMS may monitor a current, a voltage, and a temperature of each battery rack it manages, calculate a SOC (State Of Charge) of the battery based on monitoring results, and controlling charging and discharging of the battery.

The DC/DC converter 500 performs DC/DC conversion between the battery and the power conversion system (PCS). A DC/DC converter according to embodiments of the present invention may include at least one processor, and a memory configured to store at least one instruction executed by the at least one processor, an input switching set, a primary side coil, a secondary side coil, an output switching set, and a capacitor.

The DC/DC controller may control outputs of the DC/DC converter main body.

Furthermore, a battery system controller (BSC) 200 is located in each battery section which includes a plurality of batteries, peripheral circuits, and devices to monitor and control objects such as a voltage, a current, a temperature, and a circuit breaker. The battery system controller is an uppermost control device in a battery system including at least one of battery bank with a plurality of battery racks. The battery system controller may also be used as a control device in a battery system having a plurality of bank level structures.

A power conversion system (PCS) 400 installed in each battery section controls power supplied from the outside(i.e., the power grid 600) and power supplied from the battery section to the outside, thereby controlling charging and discharging of the battery. The power conversion system may include a DC/AC inverter, such as a solar inverter described in FIG. 2. The PCS 400 may be connected to the power grid 600.

In addition, an anergy management aystem (EMS)/power management system (PMS) 300 may be configured to manage the energy storage system as a whole.

The energy storage system according to embodiments of the present invention may also include a switching hub 250 for communication between the BSC 200 and a plurality of rack top DC/DC converters.

According to the energy storage system as shown in FIG. **2,** SOC leveling and SOH smoothing can be expected by removing deviation among racks. In addition, a respective rack management is possible according to a degree of degradation of each battery rack, and an overall lifespan extension can be expected. In addition, it is possible to adjust amount of charge/discharge power according to a state of each rack (active power control). In such a system, it is possible to initiate the system regardless of SOC differences among battery racks or operate the system while reducing SOC difference among battery racks. In addition, operating the battery system independent of the PCS voltage is possible.

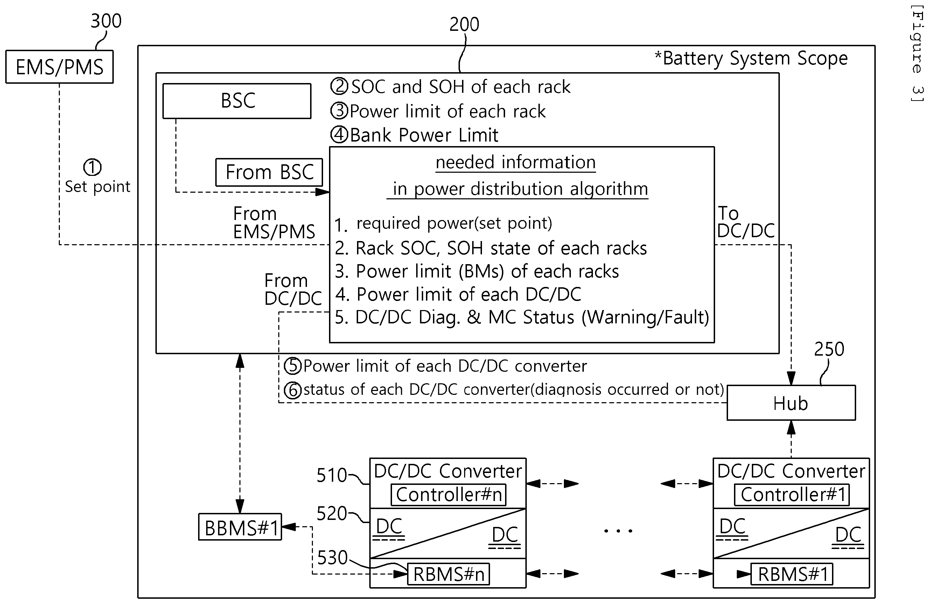

FIG. 3 illustrates a concept of a power distribution method based on battery states according to embodiments of the present invention.

The power distribution method according to embodiments of the present invention may be performed by a power distribution algorithm determined by a battery system controller (BSC). The battery system controller may determine a power distribution method according to embodiments of the present invention based on information received from a RBMS, a EMS/PMS, and DC/DC converters. The battery system controller may be implemented in a form of an interface board and may communicate with multiple rack-mounted DC/DC converters.

Referring to FIG. 3, the battery system controller may acquire information on a required power from the EMS/PMS, and may acquire information on a SOC, a SOH for each rack, a power limit of each rack, and a bank power limit from the BMS. In addition, a power limit of each DC/DC converter and state information of the DC/DC converter can be acquired through a switching hub connected to a plurality of DC/DC converters. Here, the output power limit of the DC/DC converter (Rack DC/DC Power limit) may refer to a limit value that can be output from the DC/DC converter installed in a single rack, not a battery-based BMS. In other words, the power limit of the DC/DC converter means an output limit set in the DC/DC converter itself, and this value can be stored into the DC/DC controller. In addition, a power limit (unit of [kW]) of a battery rack may be determined in advance based on a SOC and a temperature of the battery rack and may be stored inside a RBMS. The state information of the DC/DC converter may include diagnosis information (e.g. warning/fault, etc.) of the DC/DC converter and state information of a protection device (e.g. ON/OFF).

The battery system controller may determine a power distribution method or scheme based on this information and perform power distribution. Specifically, the embodiments of the present invention may calculate an output power command for each battery rack based on a battery state (e.g. State Of Charge).

A battery system controller (control apparatus) according to embodiments of the present invention may be in connection with a battery management device managing a plurality of battery racks and a plurality of DC/DC converters respectively connected to corresponding battery racks. The battery system controller may comprise at least one processor; and a memory configured to store at least one instruction executed by the at least one processor, wherein the at least one instruction includes: an instruction to collect information about each battery rack and information about each DC/DC converter; an instruction to set a power command for each battery rack according to a type and a state of each battery rack; and an instruction to perform charge/discharge control for each battery rack according to the set power command for each battery rack.

Here, the instruction to set a power command for each battery rack may include an instruction, for battery racks of the same type and having a similar state of health (SOH) range, to calculate charge power or discharge power for each battery rack based on an output power (set point) requested by the energy storage system, a sum of states of charge (SOC) of battery racks in operation, and a SOC of each battery rack.

Furthermore, the instruction to set a power command for each battery rack may include an instruction, for battery racks of different types or for battery racks having different SOH ranges, to calculate the power command for each battery rack based on an output power (set point) requested by the energy storage system, a nominal capacity of each battery rack, a SOH of each battery rack, and a SOC of each battery rack.

Here, the processor may mean a central processing unit (CPU), a graphics processing unit (GPU), or a specific processor on which methods according to embodiments of the present invention are performed. The memory (or storage device) may include at least one of a volatile storage medium and a non-volatile storage medium. For example, the memory may include at least one of a read only memory (ROM) and a random access memory (RAM).

It can be defined that a sum of the spaces (or capacities) that the entire battery racks can charge = (100-$SOC_{Rack\#1}$)+ (100-$SOC_{Rack\#2}$)+....+ (100-$SOC_{Rack\#n}$), which can be used to calculate charge power of each battery rack. In addition, it can be defined that a sum of SOCs of all battery racks = $SOC_{Rack\#1}$ + $SOC_{Rack\#2}$ +....+ $SOC_{Rack\#n}$, which can be used to calculate discharge power of each battery rack.

If a battery model used in the ESS system is all the same, chemical compositions thereof is the same, and it may be easy to manage the battery system rack by rack based on the characteristics of the battery through a BMS. However, since a degradation degree of each battery cell is actually different, a SOH differences may exist among battery cells. Therefore, by comparing SOHs of battery racks, the SOH average of the entire battery system and a SOH for each rack can be compared and a SOH deviation of a corresponding rack can be calculated as follows. A SOH deviation of a corresponding battery rack can be calculated in advance according to equation 1 below, stored and used in the battery

system controller.

[Equation 1]

$$\Delta SOH = All\ Racks\ Avg(SOH) - Each\ Racks\ SOH_{\#n}$$

When the battery model of the battery racks is the same and the battery racks have similar SOHs, that is, for racks which have SOHs in a preset SOH range, power distribution for each rack may be performed through equations 2 and 3 below.

In other words, for battery racks of the same type and having similar state of health(SOH), charge power for each rack can be represented as equation 2, and discharge power for each rack can be represented as equation 3 below.

[Equation 2]

$$Rack\#n\ CHG.Power = Set\ point\ *\ \frac{(100 - SOC_{Rack_{\#n}})}{(100\ *\ No.\,of\ online\ Racks) - sum(SOC_{online\ Racks})}$$

[Equation 3]

$$Rack\#n\ DCH.Power = Set\ point\ *\ \frac{SOC_{Rack_{\#}n}}{sum(SOC_{online\ Racks})}$$

In equations 1 and 2, the set point indicates a power command value or a command required for the battery system from a higher level controller such as the EMS/PMS. The set point has a positive value when charging and has a negative value when discharging. In addition, "sum(SOConline racks)" represents a sum of the SOCs of racks that are capable of charging/discharging and are electrically connected. In equation 2, "No. of online racks" means a number of racks that are capable of charging/discharging and are electrically connected.

Thus, if the battery model applied to battery racks is the same and the battery racks have similar SOHs, it can be understood that charge power in each rack is determined according to the set point, the number of racks in operation, the sum of the SOCs of the racks which are in operation, and the SOC of each rack.

In addition, if the battery model is the same and the batteries have similar SOHs, it can be understood that discharge power in each rack is determined according to the set point, the sum of the SOCs of the racks in operation, and the SOC of each rack.

On the other hand, when batteries of different model types are mixed in the battery system, the characteristics of the batteries may be different depending on their chemical compositions, in particular, operating specifications are different, and thus, it may be difficult to manage the battery system rack by rack through the BMS. When heterogeneous models are used in the battery system, even if SOHs of battery racks are similar, it is difficult to control the system rack by rack through the BMS according to characteristics and specifications of respective batteries.

Somehow, in case of operating DC/DC converters for respective battery racks, power distribution based on specifications and characteristics of each battery including SOH for each rack is possible. According to embodiments of the present invention, in a system including batteries of different model types and different SOHs, power distribution can be performed for each rack based on a SOH and a nominal capacity of each rack as shown in equations 4 and 5 below.

[Equation 4]

$$Racks\#n\ CHG.Power$$
$$= Set\ point\ *\ \frac{(SOH_{Rack\#n}\ *\ Nominal\ Capa._{Rack\#n})\ *\ (100 - SOC_{Rack\#n})}{sum((100 - SOCRack_{\#n})\ *\ SOH_{Rack\#n}\ *\ Nominal\ Capa._{Rack\#n})}$$

[Equation 5]

Racks#n DCH. Power

$$= \text{Set point} * \frac{SOH_{Rack\#n} * Nominal\ Capa._{Rack\#n} * SOC_{Rack\#n}}{sum(SOH_{Rack\#n} * Nominal\ Capa._{Rack\#n} * SOC_{online\ Racks})}$$

In other words, for battery racks of different types or for battery racks having different SOH ranges, a charge power for each battery rack and discharge power for each battery rack can be calculated based on an output power (set point) requested by the energy storage system, a nominal capacity of each battery rack, a SOH of each battery rack, and a SOC of each battery rack.

According to a power distribution method of the present invention, the output command (power command) for each battery rack is calculated based on a battery state (eg, SOC), the EMS/PMS may forward a set point to the battery system based on amount of output required by the grid. Here, if some racks are difficult to operate normally due to self-diagnosis during battery system operation, these racks may be excluded and only the normal racks can respond to the set point by outputting power. In addition, depending on the case, there may be a set point exceeding an output power limit of a corresponding battery rack.

Thus, in the present invention, after selecting the racks of which the set point exceeds a rack power limit, the output power can be recalculated so that the remaining racks can supplement the total output.

In a system including battery racks of the same type and similar SOHs, the power to be output by the remaining racks, except for at least one rack that receives a set point exceeding the output power limit of the rack, can be represented as the following equations for charging and discharging, respectively.

[Equation 6]

Re Calculation Racks#n CHG. Power

$$= [\text{Set point} - \text{sum(correspond to Racks P. L)}] * \frac{(100 - SOCRack_{\#n})}{sum(100 - SOCRack_{\#n})}$$

[Equation 7]

Re Calculation Racks#n DCH. Power

$$= [\text{Set point} - \text{sum(correspond to Racks P. L)}] * \frac{SOCRack_{\#n}}{sum(SOCRack_{\#n})}$$

Here, *sum(correspond to Racks P.L)* represents a sum of power limits of battery racks that receive a set point exceeding their power limits.

In addition, in a system including battery racks of different types (or models) and having different SOHs, the output power of each rack may be represented as equations 8 and 9 below.

[Equation 8]

Re Calculation Racks#n CHG. Power

$$= [\text{Set point} - \text{sum(correspond to Racks P. L)}]$$
$$* \frac{(SOH_{Rack\#n} * Nominal\ Capa._{Rack\#n}) * (100 - SOCRack_{\#n})}{sum((100 - SOCRack_{\#n}) * SOH_{Rack\#n} - Nominal\ Capa._{Rack\#n})}$$

[Equation 9]

$$\text{Re Calculation Racks\#n DCH. Power}$$

$$= [\text{Set point} - \text{sum(correspond to Racks P. L)}]$$

$$* \frac{SOH_{Rack\#n} * Nominal\ Capa._{Rack\#n} * SOCRack_{\#n}}{sum(SOH_{Rack\#n} * Nominal\ Capa._{Rack\#n} * SOC_{Rack\#n})}$$

Somehow, in calculating the output for each rack according to embodiments of the present invention, it is possible to limit a number of repetitions of the calculation by recording a number of recalculation. In the present invention, the number of recalculation of the rack output power can be set as the number of battery racks in *the system (The Number of Re Calculation limit = The Number of Racks)*.

In addition, in the embodiments of the present invention, the battery system may be controlled to respond to the output command by outputting power from the remaining racks by excluding corresponding battery racks according to whether a protection element in the corresponding battery rack is operating. In other words, if the protection element is diagnosed as not operating, the self-power limit of the battery rack is reduced (the amount of reduced power limit when the diagnosis occurs may be preset). Furthermore, when the protection element is diagnosed as operating, only the remaining racks which corresponds to (the total number of racks - the number of corresponding racks) may output powers responding to the power command.

Here, the diagnosis of the battery system may be divided into three states.

Specifically, Normal indicates a state in which the battery system can be used within a battery usage area, and Warning indicates a state in which the output may be limited because the output exceeds the normal range of the battery. In addition, Fault indicates a state in which a battery abnormality or an accident occurs, and may indicate a state in which the battery system is stopped through a protection device. In other words, a diagnosis that the protection element is operating may mean a state in which a fault occurs, and thus, at least one corresponding battery rack is stopped and separated from the remaining battery racks.

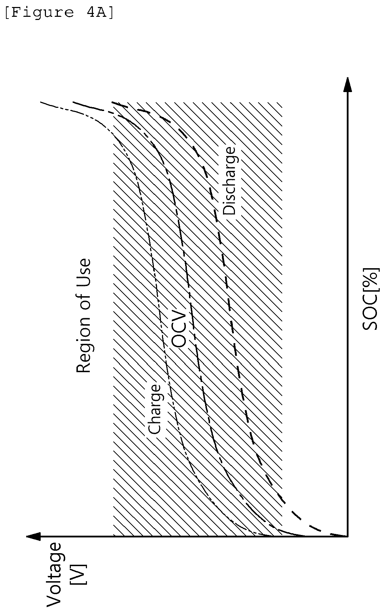

FIG. 4A is a graph illustrating charge/discharge characteristics of a battery.

Referring to FIG. 4A , a battery has a characteristic that a voltage rises during charging and a voltage decreases when discharging based on an open circuit voltage (OCV) of a state in which no current flows, in other words, no load is connected. After charging/discharging is completed, it returns to the OCV state by IR-drop.

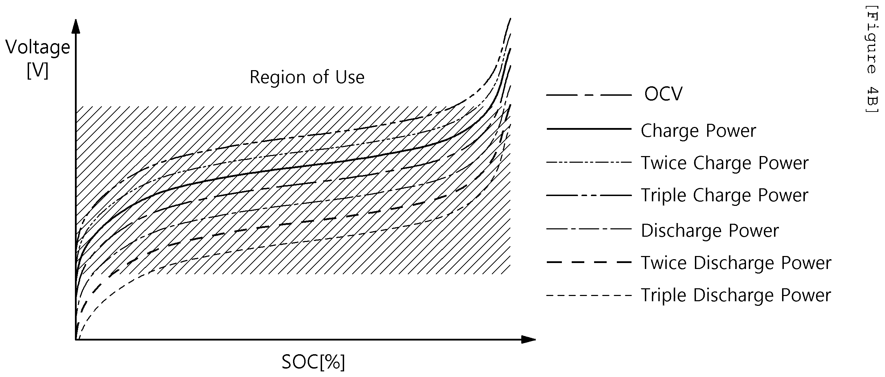

FIG. 4B is a graph illustrating charge/discharge characteristics of a battery for different powers at a same ambient temperature.

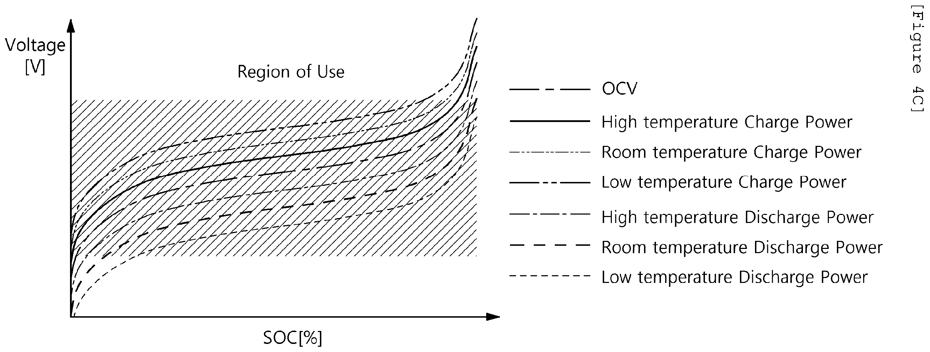

Referring to FIG. 4B and 4C, the battery has a characteristic that the greater the charge/discharge power and the lower the ambient temperature, the greater a difference with the OCV.

FIG. 4C is a graph showing the charge/discharge characteristics of a battery for different ambient temperatures at the same power.

During charging/discharging of a battery, the higher an ambient temperature, the faster a deterioration proceeds, which affects shortening of a battery life. Considering these characteristics of the battery, it is possible to determine the characteristics of the battery in advance through a cycle test for each power and each temperature. In other words, a temperature and a power that adversely affect the lifespan of the battery can be determined. Using this, limit values for use can be determined with specific powers at specific temperatures, converted into data, managed in a form of a look-up table, and stored in a BMS for management and use.

When designing a battery, a maximum power is set in consideration of a design target capacity, a cycle, and a retention capacity rate. Specifically, a capacity measurement test, a charge/discharge cycle test, and a degradation (state of health) test may be performed to determine a maximum output power that meets the design target value and then embed it into the BMS.

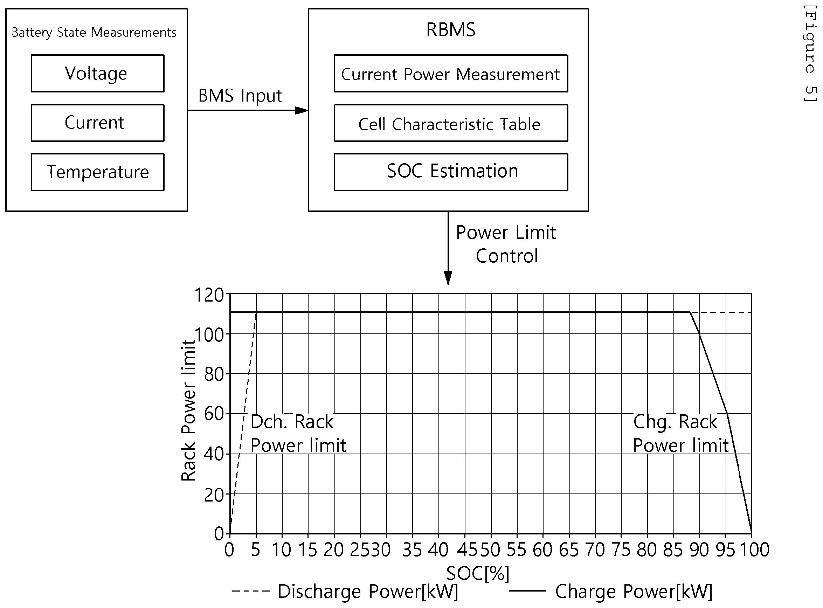

FIG. 5 shows a concept of calculating a power limit of a battery rack.

Referring to FIG. 5, when operating a battery system, a Rack BMS may determine current battery states (e.g. a voltage, a current, a temperature, etc.), measure a current power based on this, tabulate cell characteristics, and estimate a SOC. Through this, a power limit for a battery rack can be set by itself, for a stable long-term operation within a voltage and a SOC usage area.

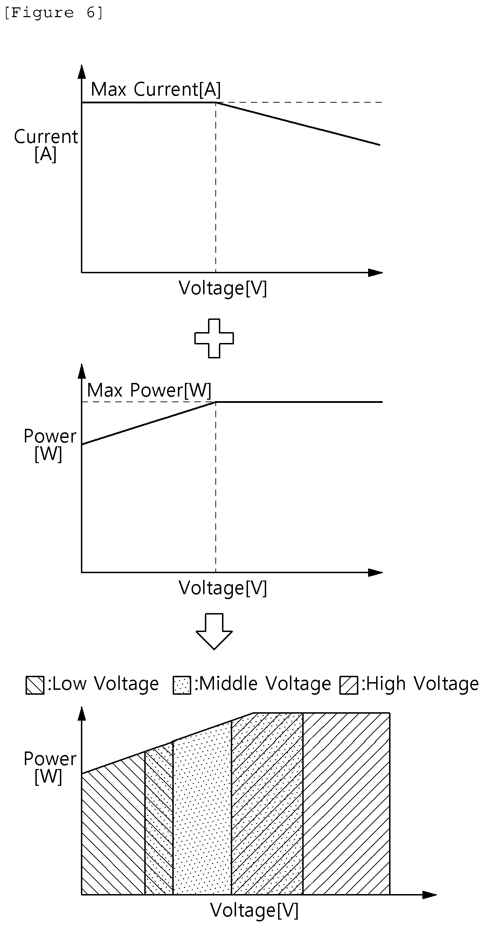

FIG. 6 shows a concept of calculating a power limit of a DC/DC converter.

A DC/DC converter is designed to respond with various outputs according to configurations of various battery models, but there is a power limit due to a DC/DC converter H/W specification. Each DC/DC converter manufacturer has its own power limiting method, and the battery system may utilize a calculated value related to the power limit of a DC/DC converter. Referring to FIG. 6, a voltage range varies according to a battery configuration, and output within a stable range is possible through a self-output limitation of the DC/DC converter accordingly.

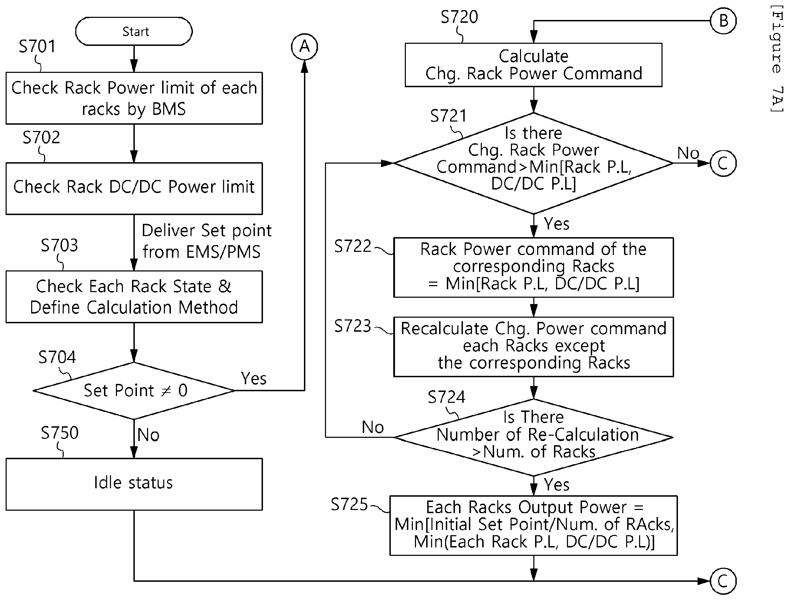

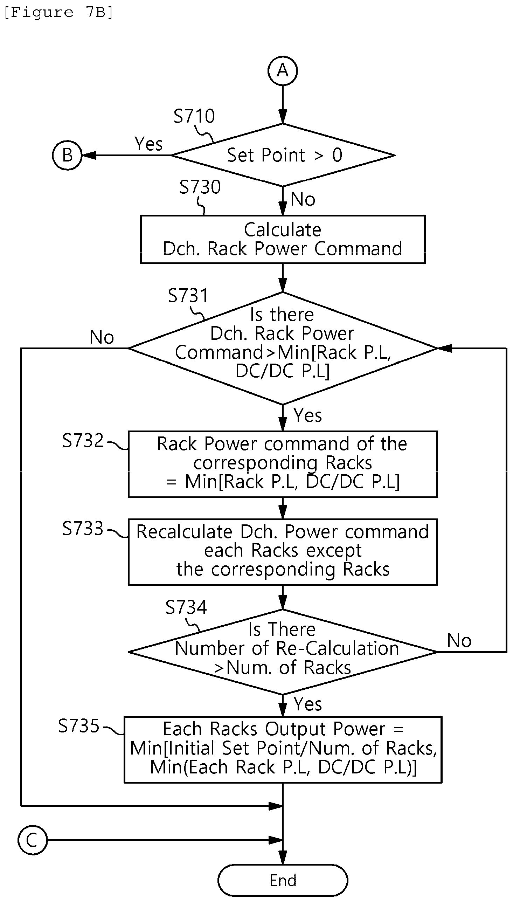

FIGs. 7A and 7B show a flowchart of a method for determining a power distribution scheme and generating a power command for each case according to embodiments of the present invention.

Referring to FIG. 7A, a rack power limit of each rack is checked by the BMS (S701), and a power limit of each DC/DC converter is checked (S702).

Thereafter, when receiving a set point from the EMS/PMS, the BSC may check a state of each rack and define a power distribution method (or scheme) according to the rack state (S703).

Here, a power distribution method suitable for each situation is determined depending on whether the battery racks in the system are of the same model and have similar SOHs, or include different models, or have different SOHs. In the instance that all of the battery racks are of the same model and have similar SOHs, the power distribution calculation formula defined by equations 2 and 3 may be used. On the other hand, in the instance that the system includes heterogeneous battery models or the battery racks have different SOHs, the power distribution calculation formula defined by equations 4 and 5 may be used.

Meanwhile, the set point value transmitted from the EMS/PMS is checked (S704). If it is 0, the battery system enters into a standby state (S750). Here, the standby state may indicate a state in which charging or discharging is immediately possible.

If the set point is not 0 (Yes in S704) and is a positive value (Yes in S710), it indicates charging. If the set point is a negative value (No in S710), it indicates discharging. Therefore, if the set point is a positive value (Yes of S710), a charge rack power command (Chg. Rack power command) is calculated (S720).

When the charge rack power command is calculated, it is checked whether the charge rack power command calculated for each rack exceeds a power limit of the rack or a power limit of a corresponding DC/DC converter. In other words, it is checked whether the charge rack power command exceeds the minimum value of the power limit of the battery rack or the power limit of the DC/DC converter (S721). If the calculated charge rack power command does not exceed the power limit of the rack or the power limit of the DC/DC converter, the power command calculation process is terminated, and the output of each rack may be controlled according to the calculated power command.

However, if the calculated charge rack power command exceeds the power limit of the rack or the power limit of the DC/DC converter, the power command of the rack is reset to the minimum value of the power limit of the battery rack or the power limit of the DC/DC converter (S722). Thereafter, charge power commands for the remaining normal racks except for the corresponding rack are recalculated (S723). Thereafter, it is checked whether a number of recalculation exceeds the total number of racks (S724), and steps S721 to S723 may be repeatedly performed in a range that a number of recalculation does not exceed the total number of racks.

When the recalculation procedure for the power commands is completed, the output power of each rack is set as Min[Initial Set Point/Num. of Racks, Min(Each rack **P.L,** DC/DC P.L)] (S725). In other words, the smaller of (the power limit of the battery rack or the power limit of the DC/DC converter) is compared again with (initial set point/total number of racks), and the smaller value can be set as the output power of the rack.

Meanwhile, referring to FIG. 7B , if the set point is a negative value in step S710 (No in S710), a discharge rack power command (Dchg. Rack power command) is calculated (S730).

When the discharge rack power command is calculated, it is checked whether the discharge rack power command calculated for each rack exceeds the power limit of the rack or the power limit of the DC/DC converter. In other words, it is checked whether the discharge rack power command exceeds the minimum value of the power limit of the battery rack or the power limit of the DC/DC converter (S731). If the calculated discharge rack power command does not exceed the power limit of the rack or the power limit of the DC/DC converter, the power command calculation process is terminated, and an output of each battery rack can be controlled according to the calculated power command.

However, if the calculated discharge rack power command exceeds the power limit of the rack or the power limit of the DC/DC converter, the power command of the corresponding rack is reset to the minimum value of the power limit of the battery rack or the power limit of the DC/DC converter (S732). Thereafter, the discharge power commands for the remaining normal racks except for the corresponding rack is recalculated (S733). Then, it is checked whether a number of recalculation exceeds the total number of racks (S734), and steps S731 to S733 may be repeatedly performed in a range that a number of recalculation does not exceed total number of racks.

When the recalculation procedure for the power commands is completed, the output power of each rack is set as Min[Initial Set Point/Num. of Racks, Min(Each rack **P.L,** DC/DC P.L)] (S735). In other words, the smaller of (the power limit of the battery rack or the power limit of the DC/DC converter) is compared again with (initial set point/total number of racks), and the smaller value may be set as the output power of the rack.

As described above, the power distribution method described with reference to FIGS. 7A and 7B may be performed by the battery system controller in the energy storage system, but a subject performing the method is not limited to the battery system controller.

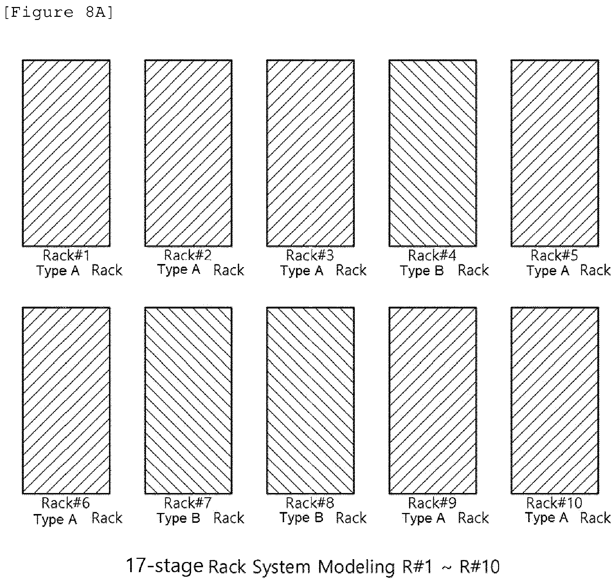

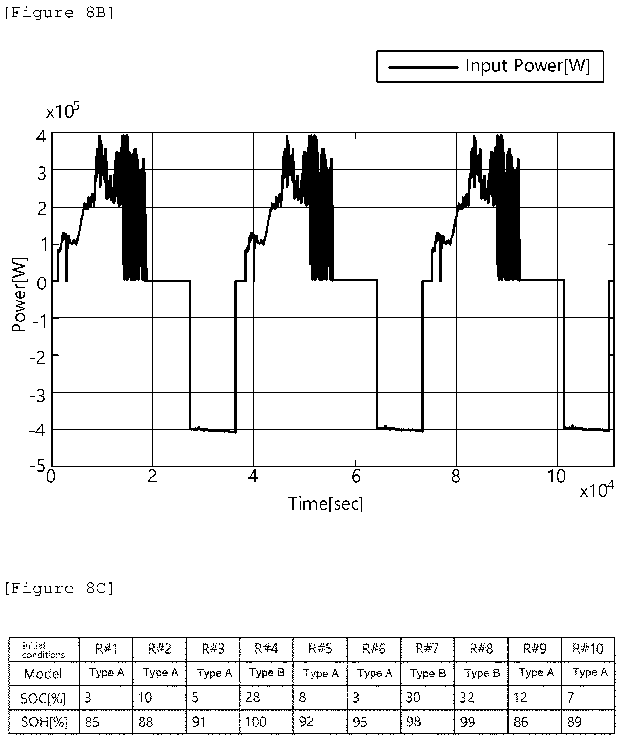

FIG. 8A shows a modeling of a battery rack, as one of simulation conditions, for confirming effects of a power distribution method according to the present invention. FIG. 8B shows an input power pattern, as one of simulation conditions, for confirming effects of a power distribution method according to the present invention. FIG. 8C shows initial conditions of each battery pack, as one of simulation conditions, for confirming effects of a power distribution method according to the present invention.

The power distribution method according to the present invention is implemented through a simulation (using MATLAB/Simulink) experiment for a typical battery system (including racks) through the simulation conditions of FIGs. 8A to 8C. In this experiment, a battery system controller is implemented to control a state of each battery system and to calculate power commands according to the distribution algorithm.

The battery system used in the experiment is a 17-stage rack system as shown in FIG. 8A, and arbitrary heterogeneous battery models for the racks are selected. The system for experiment was configured to operate in a charge/discharge cycle using an actual pattern as shown in FIG. 8B. As shown in FIGs. 8A to 8C, rack 4, rack 7, and rack 8 are different models from rack 1, rack 2, rack 3, rack 5, rack 6, rack 9 and rack 10.

Referring to FIGS. 8B and 8C, the same cycle is set three times in a row to show a difference in the amount of charge/discharge power according to an initial state setting. A power limit for each rack is set to check whether the operation is within the power limit and whether a diagnostic condition occurs. In addition, an arbitrary initial SOC and SOH are set to grasp a state of each rack and a power state in every cycle.

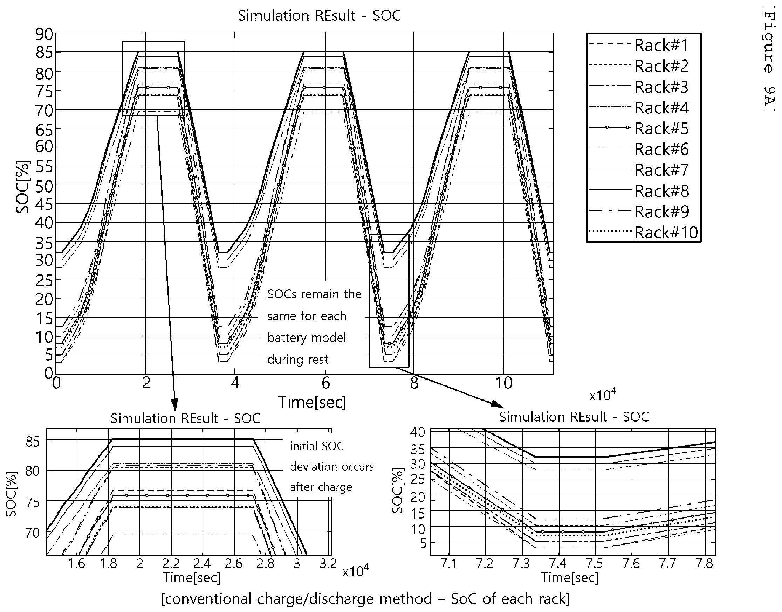

FIG. 9A shows a simulation result using a conventional power distribution method.

FIG. 9A shows SOC simulation results for each rack according to a conventional power distribution method under the simulation conditions of FIGs. 8A to 8C. In a case of using an existing method, the SOC deviation between the racks is maintained the same as the initial SOC deviation without a separate balancing operation because the powers during charging and discharging in every cycle are the same.

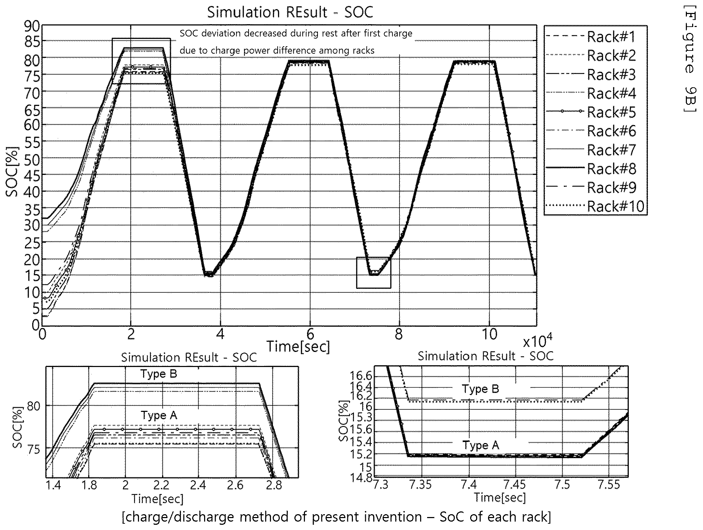

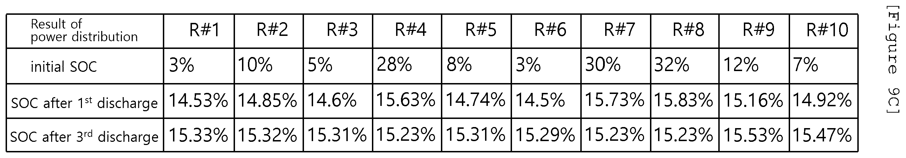

FIGs. 9B and 9C show simulation results for a power distribution method according to an embodiment of the present invention.

In other words, FIG. 9B shows SOC simulation results for each rack in a graph form when a power distribution method according to an embodiment of the present invention is used under the simulation conditions of FIGS. 8A to 8C. and FIG. 9C shows the SOC simulation results for each rack in a table form.

Referring to FIG. 9B, the SOC deviation among respective battery racks is reduced after only one cycle operation since the racks are charged with different powers depending on initial states of the battery racks.

In addition, in the power distribution method according to the present invention, the amount of charge/discharge power is determined in consideration of a battery state for each rack, so the amount of power for each rack during a first charging cycle and the amount of power during next cycle may be different. As can be seen from the numerical values shown in FIG. 9C, the SOC deviation among racks starts to decrease after 1 Cycle compared to the initial SOC deviation, and the SOC deviation keeps decreasing as the cycle progresses. Accordingly, it is not necessary to implement a separate balancing function during battery operation. This is because the rack power is determined based on a capacity and a SOH according to a battery model (or type) of each rack and the operation is performed accordingly. Therefore, according to the present invention, it is possible to solve problems of the existing battery system, such as current concentration and capacity deviation due to SOC and SOH deviations. In addition, it is possible to operate battery racks of different models with different electrochemical characteristics.

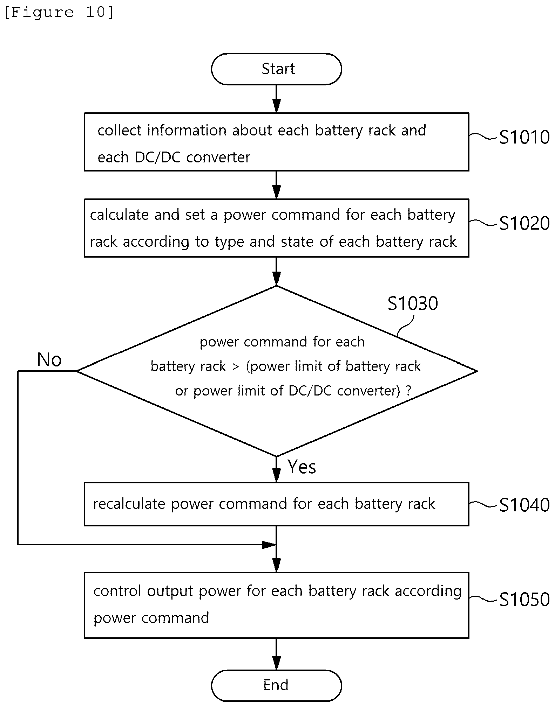

FIG. 10 is an operational flowchart of a power distribution method according to embodiments of the present invention.

The power distribution method shown in FIG. 10 may be performed by an energy storage system including a plurality of battery racks and a plurality of DC/DC converters connected to each corresponding battery rack, in particular a battery system controller.

The battery system controller (BSC) may collect information about each battery rack and each DC/DC converter in connection with rack BMSs and DC/DC converters (S1010).

The battery system controller may calculate and set a power command for each battery rack according to a type and a state of each battery rack using collected information (S1020).

Here, if the battery racks included in the system are all of the same type and within a similar SOH range, the battery system controller may calculate charge power or discharge power for each battery rack based on an output power (set point) requested by the energy storage system, a sum of states of charge (SOC) of battery racks in operation, and a SOC of each battery rack.

On the other hand, when the system includes a different types of battery rack or includes battery racks having different SOH ranges, the battery system controller may calculate a power command for each battery rack based on an output power (set point) requested by the energy storage system, a nominal capacity of each battery rack, a SOH of each battery rack, and a SOC of each battery rack.

Then, it is checked whether the calculated power command for each battery rack exceeds a power limit of a corresponding battery rack or a power limit of the DC/DC converter (S1030). In the instance that the power command for each battery rack exceeds the power limit of the corresponding battery rack or the power limit of the DC/DC converter, the power command for each battery rack is recalculated (S1040). Here, the step of recalculating the power command for each battery rack includes recalculating power commands for the other racks except for the battery racks in which the calculated power command for each battery rack exceeds a power limit of the battery rack or a power limit of the corresponding DC/DC converter.

The battery system controller may transmit the power command for each battery rack set according to the above-described process to DC/DC converters and each DC/DC converter may perform output power control for each battery rack according to the received power command (S1050).

In an existing ESS system, a required power from the EMS/PMS was commanded only to the PCS, and the battery system was used as a simple energy storage device so that the charging/discharging operation was performed according to the PCS operation regardless of individual battery characteristics. On the other hand, in the embodiments of the present invention described above, the battery system also receives a required power from the EMS/PMS as a command, and applies a SOC-based power distribution method focusing on reducing a SOC difference among individual battery racks.

The embodiments of the present disclosure may be implemented as program instructions executable by a variety of computers and recorded on a computer readable medium. The computer readable medium may include a program instruction, a data file, a data structure, or a combination thereof. The program instructions recorded on the computer readable medium may be designed and configured specifically for the present disclosure or can be publicly known and available to those who are skilled in the field of computer software.

Examples of the computer readable medium may include a hardware device such as ROM, **RAM,** and flash memory, which are specifically configured to store and execute the program instructions. Examples of the program instructions include machine codes made by, for example, a compiler, as well as high-level language codes executable by a computer, using an interpreter. The above exemplary hardware device can be configured to operate as at least one software module in order to perform the embodiments of the present disclosure, and vice versa.

While the example embodiments of the present invention and their advantages have been described in detail, it should be understood that various changes, substitutions and alterations may be made herein without departing from the scope of the invention.

**Claims**

1. A power distribution method in an energy storage system including a plurality of battery racks and a plurality of direct current/direct current, DC/DC, converters connected to each corresponding battery rack, the method comprising:

   collecting (S1010) information about each battery rack and information about each DC/DC converter;
   setting (S1020) a power command for each battery rack according to a type and a state of each battery rack; and
   performing (S1050) charge/discharge control for each battery rack according to the set power command for each battery rack; wherein
   upon the calculated power command for a battery rack exceeding a power limit of a corresponding battery rack or a power limit of a corresponding DC/DC converter, resetting (S722) the power command of the rack to the minimum value of the power limit of the battery rack or the power limit of the DC/DC converter and recalculating (S1040) the power command for each battery rack;
   wherein the recalculating the power command for each battery rack includes recalculating (S723) power commands for other racks except for the battery racks among the plurality of battery racks of which the calculated power command exceeds the power limit of the battery rack or the power limit of the corresponding DC/DC converter, wherein
   the recalculation is repeatedly performed until either the calculated power command for all battery racks does not exceed a power limit of a corresponding battery rack or a power limit of a corresponding DC/DC converter or the number of recalculations exceeds the total number of racks.

2. The power distribution method of claim 1, wherein the collecting (S1010) information about each battery rack and information about each DC/DC converter includes:

   collecting (S701, S703) information about a type, a state, and a power limit of each battery rack; and
   collecting (S702) information about a power limit and a state of each DC/DC converter.

3. The power distribution method of claim 1, wherein the setting (S1020) a power command for each battery rack includes:

   for battery racks of the same type and having a similar state of health, SOH, range,
   calculating a charge power or a discharge power for each battery rack based on an output power requested by the energy storage system, a sum of states of charge, SOC, of battery racks in operation, and a SOC of each battery rack.

4. The power distribution method of claim 1, wherein the setting (S1020) the power command for each battery rack includes:

for battery racks of different types or for battery racks having different SOH ranges,
calculating the power command for each battery rack based on an output power requested by the energy storage system, a nominal capacity of each battery rack, a SOH of each battery rack, and a SOC of each battery rack.

5. A battery system control apparatus (200), in connection with a battery management system, BMS managing a plurality of battery racks and a plurality of direct current/direct current, DC/DC, converters (500) respectively connected to corresponding battery racks, the battery system control apparatus (200) comprising:

at least one processor; and
a non-transitory memory configured to store at least one instruction executed by the at least one processor, wherein the at least one instruction includes:

an instruction to collect information about each battery rack and information about each DC/DC converter;
an instruction to set a power command for each battery rack according to a type and a state of each battery rack; and
an instruction to perform charge/discharge control for each battery rack according to the set power command for each battery rack; wherein the at least one instruction further includes:

upon the calculated power command for a battery rack exceeding a power limit of a corresponding battery rack or a power limit of a corresponding DC/DC converter, an instruction to reset the power command of the rack to the minimum value of the power limit of the battery rack or the power limit of the DC/DC converter, and an instruction to recalculate the power command for each battery rack;
wherein the recalculating the power command for each battery rack includes recalculating (S723) power commands for other racks except for the battery racks among the plurality of battery racks of which the calculated power command exceeds the power limit of the battery rack or the power limit of the corresponding DC/DC converter, wherein
the recalculation is repeatedly performed until either the calculated power command for all battery racks does not exceed a power limit of a corresponding battery rack or a power limit of a corresponding DC/DC converter or the number of recalculations exceeds the total number of racks.

6. The battery system control apparatus (200) of claim 5, wherein the instruction to set a power command for each battery rack includes an instruction, for battery racks of the same type and having a similar state of health, SOH, range, to calculate a charge power or a discharge power for each battery rack based on an output power requested by the energy storage system, a sum of states of charge, SOC, of battery racks in operation, and a SOC of each battery rack.

7. The battery system control apparatus (200) of claim 5, wherein the instruction to set a power command for each battery rack includes an instruction, for battery racks of different types or for battery racks having different SOH ranges, to calculate the power command for each battery rack based on an output power requested by the energy storage system, a nominal capacity of each battery rack, a SOH of each battery rack, and a SOC of each battery rack.

8. An energy storage system comprising:

a battery management system, BMS, configured to manage a state of a plurality of battery racks;
a plurality of direct current/direct current, DC/DC, converters (500) respectively connected to corresponding battery racks; and
a battery system controller (200) according to claim 5.

9. The energy storage system of claim 8, wherein the battery system controller (200) is further configured to collect information about a type, a state, and a power limit of each battery rack through the BMS and to collect information about a power limit and a state of each DC/DC converter (500) through a switching hub connected to the plurality of DC/DC converters (500).

10. The energy storage system of claim 8, wherein the battery system controller is further configured, for battery racks of the same type and having a similar state of health, SOH, range, to calculate a charge power or a discharge power for each battery rack based on an output power requested by the energy storage system, a sum of states of charge, SOC, of battery racks in operation, and a SOC of each battery rack.

11. The energy storage system of claim 8, wherein the battery system controller (200) is further configured, for battery racks of different types or for battery racks having different SOH ranges, to calculate the power command for each battery rack based on an output power requested by the energy storage system, a nominal capacity of each battery rack, a SOH of each battery rack, and a SOC of each battery rack.

**Patentansprüche**

1. Leistungsverteilungsverfahren in einem Energiespeichersystem, umfassend eine Mehrzahl von Batteriegestellen und eine Mehrzahl von Gleichstrom/Gleichstrom-, DC/DC-, Wandlern, welche mit jedem jeweiligen Batteriegestell verbunden sind, wobei das Verfahren umfasst:

   Sammeln (S1010) von Informationen über jedes Batteriegestell und von Informationen über jeden DC/DC-Wandler;
   Festlegen (S1020) einer Leistungsanweisung für jedes Batteriegestell gemäß einem Typ und einem Zustand jedes Batteriegestells; und
   Durchführen (S1050) einer Lade-/Entlade-Steuerung für jedes Batteriegestell gemäß der festgelegten Leistungsanweisung für jedes Batteriegestell; wobei
   nachdem die berechnete Leistungsanweisung für ein Batteriegestell eine Leistungsgrenze eines jeweiligen Batteriegestells oder eine Leistungsgrenze eines jeweiligen DC/DC-Wandlers übersteigt, Zurücksetzen (S722) der Leistungsanweisung des Gestells auf den minimalen Wert der Leistungsgrenze des Batteriegestells oder der Leistungsgrenze des DC/DC-Wandlers und erneutes Berechnen (S1040) der Leistungsanweisung für jedes Batteriegestell;
   wobei das erneute Berechnen der Leistungsanweisung für jedes Batteriegestell ein erneutes Berechnen (S723) von Leistungsanweisungen für andere Gestelle außer für die Batteriegestelle unter der Mehrzahl von Batteriegestellen umfasst, von welchen die berechnete Leistungsanweisung die Leistungsgrenze des Batteriegestells oder die Leistungsgrenze des jeweiligen DC/DC-Wandlers übersteigt, wobei
   die erneute Berechnung wiederholt durchgeführt wird bis entweder die berechnete Leistungsanweisung für alle Batteriegestelle eine Leistungsgrenze eines jeweiligen Batteriegestells oder eine Leistungsgrenze eines jeweiligen DC/DC-Wandlers nicht übersteigt oder die Anzahl von erneuten Berechnungen die gesamte Anzahl der Gestelle übersteigt.

2. Leistungsverteilungsverfahren nach Anspruch 1, wobei das Sammeln (S1010) von Informationen über jedes Batteriegestell und Informationen über jeden DC/DC-Wandler umfasst:

   Sammeln (S701, S703) von Informationen über einen Typ, einen Zustand und einer Leistungsgrenze jedes Batteriegestells; und
   Sammeln (S702) von Informationen über eine Leistungsgrenze und einen Zustand jedes DC/DC-Wandlers.

3. Leistungsverteilungsverfahren nach Anspruch 1, wobei das Festlegen (S1020) einer Leistungsanweisung für jedes Batteriegestell umfasst:

   für Batteriegestelle des gleichen Typs und welche einen ähnlichen Alterungszustand-, SOH-, Bereich aufweisen, Berechnen einer Ladeleistung oder einer Entladeleistung für jedes Batteriegestell, auf Grundlage einer Ausgangsleistung, welche durch das Energiespeichersystem angefordert wird, einer Summe von Ladezuständen, SOC, von in Betrieb befindlichen Batteriegestellen und eines SOC jedes Batteriegestells.

4. Leistungsverteilungsverfahren nach Anspruch 1, wobei das Festlegen (S1020) der Leistungsanweisung für jedes Batteriegestell umfasst:

   für Batteriegestelle unterschiedlicher Typen oder für Batteriegestelle, welche unterschiedliche SOH-Bereiche aufweisen,
   Berechnen der Ladeleistung für jedes Batteriegestell, auf Grundlage einer Ausgangsleistung, welche durch das Energiespeichersystem angefordert wird, einer nominellen Kapazität jedes Batteriegestells, eines SOH jedes Batteriegestells und eines SOC jedes Batteriegestells.

5. Batteriesystem-Steuerungsvorrichtung (200), welche, in Verbindung mit einem Batterieverwaltungssystem, BMS, eine Mehrzahl von Batteriegestellen und eine Mehrzahl von Gleichstrom/Gleichstrom-, DC/DC-, Wandlern (500) verwaltet, welche jeweils mit jeweiligen Batteriegestellen verbunden sind, wobei die Batteriesystem-Steuerungsvorrichtung (200) umfasst:

wenigstens einen Prozessor; und
einen nichtflüchtigen Speicher, welcher dazu eingerichtet ist, wenigstens eine Instruktion zu speichern, welche durch den wenigstens einen Prozessor ausgeführt wird,
wobei die wenigstens eine Instruktion umfasst:

eine Instruktion, um Informationen über jedes Batteriegestell und Informationen über jeden DC/DC-Wandler zu sammeln;
eine Instruktion, um eine Leistungsanweisung für jedes Batteriegestell gemäß einem Typ und einem Zustand jedes Batteriegestells festzulegen; und
eine Instruktion, um eine Lade-/Entlade-Steuerung für jedes Batteriegestell gemäß der festgelegten Leistungsanweisung für jedes Batteriegestell durchzuführen; wobei die wenigstens eine Instruktion ferner umfasst:

nachdem die berechnete Leistungsanweisung für ein Batteriegestell eine Leistungsgrenze eines jeweiligen Batteriegestells oder eine Leistungsgrenze eines jeweiligen DC/DC-Wandlers übersteigt, eine Instruktion, um die Leistungsanweisung des Gestells auf den minimalen Wert der Leistungsgrenze des Batteriegestells oder der Leistungsgrenze des DC/DC-Wandlers zurückzusetzen, und eine Instruktion, um die Leistungsanweisung für jedes Batteriegestell erneut zu berechnen;
wobei das erneute Berechnen der Leistungsanweisung für jedes Batteriegestell ein erneutes Berechnen (S723) von Leistungsanweisungen für andere Gestelle außer für die Batteriegestelle unter der Mehrzahl von Batteriegestellen umfasst, von welchen die berechnete Leistungsanweisung die Leistungsgrenze des Batteriegestells oder die Leistungsgrenze des jeweiligen DC/DC-Wandlers übersteigt, wobei
die erneute Berechnung wiederholt durchgeführt wird bis entweder die berechnete Leistungsanweisung für alle Batteriegestelle eine Leistungsgrenze eines jeweiligen Batteriegestells oder eine Leistungsgrenze eines jeweiligen DC/DC-Wandlers nicht übersteigt oder die Anzahl von erneuten Berechnungen die gesamte Anzahl der Gestelle übersteigt.

6. Batteriesystem-Steuerungsvorrichtung (200) nach Anspruch 5, wobei die Instruktion, um eine Leistungsanweisung für jedes Batteriegestell festzulegen, eine Instruktion, für Batteriegestelle des gleichen Typs und welche einen ähnlichen Alterungszustand-, SOH-, Bereich aufweisen, umfasst, um eine Ladeleistung oder eine Entladeleistung für jedes Batteriegestell zu berechnen, auf Grundlage einer Ausgangsleistung, welche durch das Energiespeichersystem angefordert wird, einer Summe von Ladezuständen, SOC, von in Betrieb befindlichen Batteriegestellen und eines SOC jedes Batteriegestells.

7. Batteriesystem-Steuerungsvorrichtung (200) nach Anspruch 5, wobei die Instruktion, um eine Leistungsanweisung für jedes Batteriegestell festzulegen, eine Instruktion, für Batteriegestelle unterschiedlicher Typen oder für Batteriegestelle, welche unterschiedliche SOH-Bereiche aufweisen, umfasst, um die Ladeleistung für jedes Batteriegestell zu berechnen, auf Grundlage einer Ausgangsleistung, welche durch das Energiespeichersystem angefordert wird, einer nominellen Kapazität jedes Batteriegestells, eines SOH jedes Batteriegestells und eines SOC jedes Batteriegestells.

8. Energiespeichersystem, umfassend:

ein Batterieverwaltungssystem, BMS, welches dazu eingerichtet ist, einen Zustand einer Mehrzahl von Batteriegestellen zu verwalten;
eine Mehrzahl von Gleichstrom/Gleichstrom-, DC/DC-, Wandlern (500), welche jeweils mit jeweiligen Batteriegestellen verbunden sind; und
eine Batteriesystem-Steuerungsvorrichtung (200) nach Anspruch 5.

9. Energiespeichersystem nach Anspruch 8, wobei die Batteriesystem-Steuerungsvorrichtung (200) ferner dazu eingerichtet ist, Informationen über einen Typ, einen Zustand und eine Leistungsgrenze jedes Batteriegestells durch das BMS zu sammeln und Informationen über eine Leistungsgrenze und einen Zustand jedes DC/DC-Wandlers (500) durch einen Switching-Hub zu sammeln, welcher mit der Mehrzahl von DC/DC-Wandlern (500) verbunden ist.

10. Energiespeichersystem nach Anspruch 8, wobei die Batteriesystem-Steuerungsvorrichtung ferner dazu eingerichtet ist, für Batteriegestelle des gleichen Typs und welche einen ähnlichen Alterungszustand-, SOH-, Bereich aufweisen, eine Ladeleistung oder eine Entladeleistung für jedes Batteriegestell zu berechnen, auf Grundlage einer Ausgangsleistung, welche durch das Energiespeichersystem angefordert wird, einer Summe von Ladezuständen, SOC, von in Betrieb befindlichen Batteriegestellen und eines SOC jedes Batteriegestells.

11. Energiespeichersystem nach Anspruch 8, wobei die Batteriesystem-Steuerungsvorrichtung (200) ferner dazu eingerichtet ist, für Batteriegestelle unterschiedlicher Typen oder für Batteriegestelle, welche unterschiedliche SOH-Bereiche aufweisen, die Ladeleistung für jedes Batteriegestell zu berechnen, auf Grundlage einer Ausgangsleistung, welche durch das Energiespeichersystem angefordert wird, einer nominellen Kapazität jedes Batteriegestells, eines SOH jedes Batteriegestells und eines SOC jedes Batteriegestells.

**Revendications**

1. Procédé de distribution de puissance dans un système de stockage d'énergie comportant une pluralité de bâtis de batteries et une pluralité de convertisseurs courant continu/courant continu, CC/CC, connectés à chaque bâti de batteries correspondant, le procédé comprenant :

   la collecte (S1010) d'informations sur chaque bâti de batteries et d'informations sur chaque convertisseur CC/CC ;
   la définition (S1020) d'une commande de puissance pour chaque bâti de batteries selon un type et un état de chaque bâti de batteries ; et
   la réalisation (S1050) d'une régulation de charge/décharge pour chaque bâti de batteries selon la commande de puissance définie pour chaque bâti de batteries ; dans lequel
   lorsque la commande de puissance calculée pour un bâti de batteries dépasse une limite de puissance d'un bâti de batteries correspondant ou une limite de puissance d'un convertisseur CC/CC correspondant, la redéfinition (S722) de la commande de puissance du bâti à la valeur minimale de la limite de puissance du bâti de batteries ou de la limite de puissance du convertisseur CC/CC, et la réitération du calcul (S1040) de la commande de puissance pour chaque bâti de batteries ;
   dans lequel la réitération du calcul de la commande de puissance pour chaque bâti de batteries comprend la réitération du calcul (S723) des commandes de puissance pour d'autres bâtis, à l'exception des bâtis de batteries parmi la pluralité de bâtis de batteries dont la commande de puissance calculée dépasse la limite de puissance du bâti de batteries ou la limite de puissance du convertisseur CC/CC correspondant, dans lequel la réitération du calcul est réalisée à plusieurs reprises jusqu'à ce que soit la commande de puissance calculée pour tous les bâtis de batteries ne dépasse pas une limite de puissance d'un bâti de batteries correspondant ou une limite de puissance d'un convertisseur CC/CC correspondant, soit le nombre de réitérations du calcul dépasse le nombre total de bâtis.

2. Procédé de distribution de puissance selon la revendication 1, dans lequel la collecte (S1010) d'informations sur chaque bâti de batteries et d'informations sur chaque convertisseur CC/CC comprend :

   la collecte (S701, S703) d'informations sur un type, un état et une limite de puissance de chaque bâti de batteries ; et
   la collecte (S702) d'informations sur une limite de puissance et un état de chaque convertisseur CC/CC.

3. Procédé de distribution de puissance selon la revendication 1, dans lequel la définition (S1020) d'une commande de puissance pour chaque bâti de batteries comprend :

   pour des bâtis de batteries du même type et ayant une plage d'état de santé, SOH, similaire,
   le calcul d'une puissance de charge ou d'une puissance de décharge pour chaque bâti de batteries sur la base d'une puissance de sortie demandée par le système de stockage d'énergie, d'une somme d'états de charge, SOC, de bâtis de batteries en fonctionnement et d'un SOC de chaque bâti de batteries.

4. Procédé de distribution de puissance selon la revendication 1, dans lequel la définition (S1020) de la commande de puissance pour chaque bâti de batteries comprend :

pour des bâtis de batteries de différents types ou pour des bâtis de batteries ayant différentes plages de SOH, le calcul de la commande de puissance pour chaque bâti de batteries sur la base de la puissance de sortie demandée par le système de stockage d'énergie, d'une capacité nominale de chaque bâti de batteries, d'un SOH de chaque bâti de batteries et d'un SOC de chaque bâti de batteries.

5. Appareil de régulation de système de batteries (200), en connexion avec un système de gestion de batteries, BMS, gérant une pluralité de bâtis de batteries et une pluralité de convertisseurs courant continu/courant continu, CC/CC, (500) connectés respectivement à des bâtis de batteries correspondants, l'appareil de régulation de système de batteries (200) comprenant :

au moins un processeur ; et
une mémoire non transitoire configurée pour stocker au moins une instruction exécutée par l'au moins un processeur,
dans lequel l'au moins une instruction comprend :

une instruction pour collecter des informations sur chaque bâti de batteries et des informations sur chaque convertisseur CC/CC ;
une instruction pour définir une commande de puissance pour chaque bâti de batteries selon un type et un état de chaque bâti de batteries ; et
une instruction pour réaliser une régulation de charge/décharge pour chaque bâti de batteries selon la commande de puissance définie pour chaque bâti de batteries ; dans lequel l'au moins une instruction comprend en outre :

lorsque la commande de puissance calculée pour un bâti de batteries dépasse une limite de puissance d'un bâti de batteries correspondant ou une limite de puissance d'un convertisseur CC/CC correspondant, une instruction pour redéfinir la commande de puissance du bâti à la valeur minimale de la limite de puissance du bâti de batteries ou de la limite de puissance du convertisseur CC/CC, et une instruction pour réitérer le calcul de la commande de puissance pour chaque bâti de batteries ;
dans lequel la réitération du calcul de la commande de puissance pour chaque bâti de batteries comprend la réitération du calcul (S723) des commandes de puissance pour d'autres bâtis, à l'exception des bâtis de batteries parmi la pluralité de bâtis de batteries dont la commande de puissance calculée dépasse la limite de puissance du bâti de batteries ou la limite de puissance du convertisseur CC/CC correspondant, dans lequel la réitération du calcul est réalisée à plusieurs reprises jusqu'à ce que soit la commande de puissance calculée pour tous les bâtis de batteries ne dépasse pas une limite de puissance d'un bâti de batteries correspondant ou une limite de puissance d'un convertisseur CC/CC correspondant, soit le nombre de réitérations du calcul dépasse le nombre total de bâtis.

6. Appareil de régulation de système de batteries (200) selon la revendication 5, dans lequel l'instruction pour définir une commande de puissance pour chaque bâti de batteries comprend une instruction, pour des bâtis de batteries du même type et ayant une plage d'état de santé, SOH, similaire, pour calculer une puissance de charge ou une puissance de décharge pour chaque bâti de batteries sur la base d'une puissance de sortie demandée par le système de stockage d'énergie, d'une somme d'états de charge, SOC, de bâtis de batteries en fonctionnement, et d'un SOC de chaque bâti de batteries.

7. Appareil de régulation de système de batteries (200) selon la revendication 5, dans lequel l'instruction pour définir une commande de puissance pour chaque bâti de batteries comprend une instruction, pour des bâtis de batteries de différents types ou pour des bâtis de batteries ayant différentes plages de SOH, pour calculer la commande de puissance pour chaque bâti de batteries sur la base d'une puissance de sortie demandée par le système de stockage d'énergie, d'une capacité nominale de chaque bâti de batteries, d'un SOH de chaque bâti de batteries et d'un SOC de chaque bâti de batteries.

8. Système de stockage d'énergie comprenant :

un système de gestion de batteries, BMS, configuré pour gérer un état d'une pluralité de bâtis de batteries ;
une pluralité de convertisseurs courant continu/courant continu, CC/CC, (500) respectivement connectés à des bâtis de batteries correspondants ; et
un dispositif de régulation de système de batteries (200) selon la revendication 5.

**9.** Système de stockage d'énergie selon la revendication 8, dans lequel le dispositif de régulation de système de batteries (200) est en outre configuré pour collecter des informations sur un type, un état et une limite de puissance de chaque bâti de batteries par le biais du BMS, et pour collecter des informations sur une limite de puissance et un état de chaque convertisseur CC/CC (500) par le biais d'un commutateur réseau connecté à la pluralité de convertisseurs CC/CC (500).

**10.** Système de stockage d'énergie selon la revendication 8, dans lequel le dispositif de régulation de système de batteries est en outre configuré, pour des bâtis de batteries du même type et ayant une plage d'état de santé, SOH, similaire, pour calculer une puissance de charge ou une puissance de décharge pour chaque bâti de batteries sur la base d'une puissance de sortie demandée par le système de stockage d'énergie, d'une somme d'états de charge, SOC, de bâtis de batteries en fonctionnement et d'un SOC de chaque bâti de batteries.

**11.** Système de stockage d'énergie selon la revendication 8, dans lequel le dispositif de régulation de système de batteries (200) est en outre configuré, pour des bâtis de batteries de différents types ou pour des bâtis de batteries ayant différentes plages de SOH, pour calculer la commande de puissance pour chaque bâti de batteries sur la base d'une puissance de sortie demandée par le système de stockage d'énergie, d'une capacité nominale de chaque bâti de batteries, d'un SOH de chaque bâti de batteries et d'un SOC de chaque bâti de batteries.

[Figure 1]

[Figure 2]

[Figure 3]

EP 4 213 335 B1

300 — EMS/PMS

200

*Battery System Scope

BSC

② SOC and SOH of each rack
③ Power limit of each rack
④ Bank Power Limit

From BSC

From EMS/PMS

To DC/DC

needed information
in power distribution algorithm

1. required power(set point)
2. Rack SOC, SOH state of each racks
3. Power limit (BMs) of each racks
4. Power limit of each DC/DC
5. DC/DC Diag. & MC Status (Warning/Fault)

From DC/DC

① Set point

⑤ Power limit of each DC/DC converter
⑥ status of each DC/DC converter(diagnosis occurred or not)

250 — Hub

BBMS#1

510 — DC/DC Converter — Controller#n
520 — DC / DC
530 — RBMS#n

. . .

DC/DC Converter — Controller#1
DC / DC
RBMS#1

[Figure 4A]

[Figure 4B]

[Figure 4C]

[Figure 5]

[Figure 6]

[Figure 7A]

EP 4 213 335 B1

Start

S701 Check Rack Power limit of each racks by BMS

S702 Check Rack DC/DC Power limit

Deliver Set point from EMS/PMS

S703 Check Each Rack State & Define Calculation Method

S704 Set Point ≠ 0 — Yes → (A)

No

S750 Idle status

(B)

S720 Calculate Chg. Rack Power Command

S721 Is there Chg. Rack Power Command > Min[Rack P.L, DC/DC P.L] — No → (C)

Yes

S722 Rack Power command of the corresponding Racks = Min[Rack P.L, DC/DC P.L]

S723 Recalculate Chg. Power command each Racks except the corresponding Racks

S724 Is There Number of Re-Calculation > Num. of Racks — No

Yes

S725 Each Racks Output Power = Min[Initial Set Point/Num. of RAcks, Min(Each Rack P.L, DC/DC P.L)]

(C)

[Figure 7B]

[Figure 8A]

Rack#1
Type A  Rack

Rack#2
Type A  Rack

Rack#3
Type A  Rack

Rack#4
Type B  Rack

Rack#5
Type A  Rack

Rack#6
Type A  Rack

Rack#7
Type B  Rack

Rack#8
Type B  Rack

Rack#9
Type A  Rack

Rack#10
Type A  Rack

17-stage Rack System Modeling R#1 ~ R#10

[Figure 8B]

[Figure 8C]

| initial conditions | R#1 | R#2 | R#3 | R#4 | R#5 | R#6 | R#7 | R#8 | R#9 | R#10 |
|---|---|---|---|---|---|---|---|---|---|---|
| Model | Type A | Type A | Type A | Type B | Type A | Type A | Type B | Type B | Type A | Type A |
| SOC[%] | 3 | 10 | 5 | 28 | 8 | 3 | 30 | 32 | 12 | 7 |
| SOH[%] | 85 | 88 | 91 | 100 | 92 | 95 | 98 | 99 | 86 | 89 |

[Figure 9A]

[Figure 9B]

[Figure 9C]

| Result of power distribution | R#1 | R#2 | R#3 | R#4 | R#5 | R#6 | R#7 | R#8 | R#9 | R#10 |
|---|---|---|---|---|---|---|---|---|---|---|
| initial SOC | 3% | 10% | 5% | 28% | 8% | 3% | 30% | 32% | 12% | 7% |
| SOC after 1st discharge | 14.53% | 14.85% | 14.6% | 15.63% | 14.74% | 14.5% | 15.73% | 15.83% | 15.16% | 14.92% |
| SOC after 3rd discharge | 15.33% | 15.32% | 15.31% | 15.23% | 15.31% | 15.29% | 15.23% | 15.23% | 15.53% | 15.47% |

[Figure 10]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012223670 A1
- US 2021168964 A1